Europäisches Patentamt

European Patent Office

Office européen des brevets

(19)

(11) Veröffentlichungsnummer: **0 030 265**
**B1**

(12) **EUROPÄISCHE PATENTSCHRIFT**

(45) Veröffentlichungstag der Patentschrift:
**25.05.83**

(51) Int. Cl.³: **C 09 C 1/56,** C 09 C 1/48

(21) Anmeldenummer: **80106515.2**

(22) Anmeldetag: **24.10.80**

(54) **Verfahren zur Entfernung von Russ aus wässrigen Suspensionen.**

(30) Priorität: **07.12.79 DE 2949286**

(43) Veröffentlichungstag der Anmeldung:
**17.06.81 Patentblatt 81/24**

(45) Bekanntmachung des Hinweises auf die Patenterteilung:
**25.05.83 Patentblatt 83/21**

(84) Benannte Vertragsstaaten:
**DE FR NL**

(56) Entgegenhaltungen:
**DE-A-2 546 072**
**DE-B-2 515 633**
**US-A-2 987 386**
**US-A-3 039 851**

(73) Patentinhaber: **HOECHST AKTIENGESELLSCHAFT,
Postfach 80 03 20, D-6230 Frankfurt/Main 80 (DE)**

(72) Erfinder: **Kandler, Joachim, Dr., Amselweg 10,
D-5042 Erftstadt (DE)**
Erfinder: **Wolter, Manfred, Dr., Alleestrasse 48,
D-5030 Hürth-Knapsack (DE)**

BUNDESDRUCKEREI BERLIN

Verfahren zur Entfernung von Ruß aus wäßrigen Suspensionen

Die vorliegende Erfindung betrifft ein Verfahren zur Entfernung von Ruß aus einer wäßrigen Suspension, welche durch Auswaschen eines rußhaltigen Gases mit Wasser erhalten wurde, durch Behandeln der Suspension mit Kohlenwasserstoffen sowie Abtrennen und Trocknen des Rußes.

Bei der Synthesegaserzeugung durch thermische Umwandlung von bei Raumtemperatur flüssigen Kohlenwasserstoffen in Gegenwart von Sauerstoff oder sauerstoffhaltigen Gasen und gegebenenfalls Wasserdampf bei Temperaturen oberhalb von 1000° C und Drücken von 1 bis 80 bar wird ein rußhaltiges Reaktionsgas erhalten, aus welchem der Ruß durch Auswaschen mit Wasser entfernt wird, wobei wäßrige Suspensionen mit einem Gehalt von 5 bis 40 g Ruß/Liter anfallen (vgl. DE-B-2 515 633).

Die Aufarbeitung der wäßrigen Rußsuspensionen kann durch Zusatz von mit Wasser nicht mischbaren Lösungsmitteln erfolgen, wobei Agglomerate in Form von Kügelchen oder Granulaten gebildet werden, welche abgesiebt werden können. Diese Agglomerate können zur Ausnutzung ihres Energiegehaltes — gegebenenfalls zusammen mit Heizöl als Unterfeuerungsmittel — verbrannt werden (vgl. DD-PS 54 001).

Da die in den wäßrigen Suspensionen anfallenden Ruße eine große spezifische Oberfläche und infolge hoher Struktur eine ausgeprägte Absorptionskraft aufweisen, ist die Gewinnung dieser Ruße in Substanz wünschenswert. Daher wird bereits in der DE-A-2 654 235 vorgeschlagen, die wäßrige Rußsuspension zur Pelletierung des Rußes mit Heizöl zu verquirlen und die abgetrennten Pellets durch Extraktion mit Leichtbenzin vom Heizöl zu befreien, während gemäß der DE-B-2 546 072 der Ruß in der Ruß-Wasser-Suspension mit $C_3$- bis $C_8$-Kohlenwasserstoffen behandelt und dann abgetrennt wird, wobei bei der Abtrennung des Rußes vom Wasser solche Temperatur- und Druckbedingungen eingestellt werden, daß die eingesetzten Kohlenwasserstoffe in der Dampfphase vorliegen.

Schließlich wird nach der DE-B-2 515 633 aus wäßriger Rußsuspension ein freifließender, für den Einsatz in Depolarisatormassen von Trockenbatterien geeigneter Ruß erhalten, indem man die Rußsuspension mit verdampfbaren Kohlenwasserstoffen bei Temperaturen von 5 bis 120° C und Drucken von 1 bis 20 bar in flüssiger Phase intensiv mischt und den Ruß nach Abtrennung von der Flüssigkeit durch Erhitzen von Kohlenwasserstoffen und Wasser befreit sowie anschließend die Temperatur auf 1100 bis 2200° C steigert.

Nachteilig ist bei dem aus der DE-B-2 515 633 bekannten Verfahren, daß beim Erhitzen des von der Flüssigkeit abgetrennten Rußes zu seiner Befreiung von Kohlenwasserstoffen und Wasser stets eine gewisse Menge Ruß vom Dampf mitgeführt wird, was bereits nach einigen Betriebsstunden zur Verstopfung von Leitungen und Apparaten der Anlage führt. Darüber hinaus kann der vom Dampf mitgeführte Ruß wegen seiner hohen Absorptionskraft die kondensierten Kohlenwasserstoffe und das kondensierte Wasser wieder aufnehmen, wobei im Extremfall neben einer schwer handhabbaren Paste keine flüssige Phase mehr vorliegt. Diese Paste kann nur durch Verbrennen beseitigt werden, wodurch der in ihr enthaltene wertvolle Ruß verlorengeht.

Es ist daher Aufgabe der vorliegenden Erfindung, ein Verfahren zur Entfernung von Ruß aus einer wäßrigen Suspension durch Behandeln mit Kohlenwasserstoffen sowie Abtrennen und Trocknen des Rußes anzugeben, bei welchem auf eine Kondensation der beim Trocknen des Rußes anfallenden Dampfphase und damit auf eine Isolierung der Kohlenwasserstoffe in flüssiger Form verzichtet werden kann. Das wird erfindungsgemäß dadurch erreicht, daß man in die einen Feststoffgehalt von 0,5 bis 4 Gew.-% aufweisende Suspension einen aus Kohlenwasserstoffen und mindestens einem Inertgas bestehenden Gasstrom bei Temperaturen von 10 bis 80° C einleitet, wobei der Gasstrom durch Überleiten von Inertgas über auf Temperaturen von 200 bis 400° C erhitzten abgetrennten Ruß erzeugt wird.

Das Verfahren gemäß der Erfindung kann wahlweise auch noch dadurch ausgestaltet sein, daß

a) der Gasstrom zur Abtrennung des Rußes vom Wasser als Schüttgut 5 bis 30 Volumen-% Kohlenwasserstoff enthält;

b) der Gasstrom zur Abtrennung des Rußes vom Wasser als schaumige Paste 0,1 bis 5 Volumen-% Kohlenwasserstoff enthält;

c) die Einleitung des Gasstromes unter Rühren erfolgt;

d) aliphatische oder cycloaliphatische Kohlenwasserstoffe mit 4 bis 8 C-Atomen verwendet sind;

e) als Inertgas Stickstoff dient.

Beim erfindungsgemäßen Verfahren ist es von besonderem Vorteil, daß keine isolierte Kohlenwasserstoff-Phase auftritt, obwohl die Temperatur der wäßrigen Rußsuspension unterhalb der Siedetemperatur des im Gasstrom enthaltenen Kohlenwasserstoffes liegt. Deshalb ist der abgetrennte Ruß frei fließend und stets rieselfähig.

Bei diskontinuierlicher Durchführung des Verfahrens gemäß der Erfindung scheidet sich nach 1- bis 5minütigem Einleiten des Gasstromes in die Suspension der Ruß als pulverige, nicht klebende Phase auf der Wasseroberfläche ab.

Bei einer kontinuierlichen Durchführung des erfindungsgemäßen Verfahrens führt man einem Rührgefäß die wäßrige Rußsuspension durch den Boden her in einer solchen Menge zu, daß die mit dem Gasstrom eingeleiteten Kohlenwasserstoffe unmittelbar vom Ruß aufgenommen werden. Anstelle eines Rührgefäßes kann zum Inberührungbringen der wäßrigen Rußsuspension mit dem kohlenwasserstoffhaltigen Gasstrom auch ein Waschturm oder eine andere Vorrichtung zur Gaswäsche verwendet werden, wobei aber das Auftreten eines pulverigen Feststoffes auf der Wasseroberfläche berücksichtigt werden muß.

Beim Verfahren gemäß der Erfindung wird beim Trocknen des abgetrennten Rußes nicht nur der gesamte in ihm enthaltene Kohlenwasserstoffanteil zur Behandlung weiterer wäßriger Rußsuspensionen wiederverwendet, sondern auch der bei der Erzeugung des Gasstromes mitgeführte Ruß zurückgewonnen.

Leitet man beim erfindungsgemäßen Verfahren einen Gasstrom mit weniger als 1 Volumen-% Kohlenwasserstoffen, wie er beispielsweise als Spülgas von mit flüssigen Kohlenwasserstoffen gefüllten Lagertanks anfällt, in die wäßrige Rußsuspension ein, so reichert sich der Ruß als Schaum an der Wasseroberfläche an. Unterbricht man nun die Einleitung des Gasstromes, so trennen sich Ruß und Wasser vollständig voneinander, wobei die an der Wasseroberfläche befindliche schaumige Paste im Gegensatz zur unbehandelten wäßrigen Rußsuspension ohne Schwierigkeiten durch Filtration abgetrennt werden kann. Offensichtlich genügt bereits die geringe Menge im Gasstrom enthaltener Kohlenwasserstoffe, um den Ruß soweit zu hydrophobieren, daß Bläschen des Transportgases durch Adhäsion an die Rußteilchen gebunden werden und es zur Anreicherung des Schaumes an der Wasseroberfläche kommt. Auf diese Weise lassen sich auch kleine, zwangsläufig anfallende Kohlenwasserstoffmengen ausnutzen. Der als schaumige Paste anfallende Ruß kann in pulveriges, nicht klebendes Material überführt werden, indem im Anschluß an die Einleitung des Gasstromes flüssiger Kohlenwasserstoff unter Rühren zugegeben wird.

## Beispiel 1 (Vergleichsbeispiel)

Zu 3 l einer wäßrigen Rußsuspension mit einem Rußgehalt von 8 g/l wurden bei 25° C 60 g Benzin (Siedebereich: 60 bis 90° C) unter Rühren hinzugegeben. Nach einer Rührzeit von 3 Minuten sammelte sich der Ruß als pulverige freifließende Masse an der Wasseroberfläche an, während die darunter befindliche wäßrige Phase völlig klar und damit rußfrei war. Die pulverige Masse wurde nach dem Abfiltrieren auf 300° C erwärmt, und die dabei freiwerdende Dampfphase wurde kondensiert. Es wurden 20 g trockener, frei fließender Ruß und 121 g Kondensat erhalten, in welchem sich 4 g Ruß befanden.

## Beispiel 2 (gemäß der Erfindung)

In 3 l einer wäßrigen Rußsuspension mit einem Rußgehalt von 8 g/l wurde unter Rühren bei 25° C ein Stickstoff-Strom eingeleitet, welcher vorher über am Rückfluß siedendes Benzin (Siedebereich: 60 bis 90° C) geführt worden war und 10 bis 12 Volumen-% Benzindampf enthielt. Nach Einleiten von 150 l des benzindampfhaltigen Stickstoffs hatte sich der Ruß vollständig als pulverige Phase an der Wasseroberfläche abgeschieden, während die darunter befindliche wäßrige Phase völlig klar und damit rußfrei war.

Die abfiltrierte pulverige Phase (140 g) wurde in einem Glasrohr unter Überleiten von Stickstoff (100 l/h) 60 Minuten lang auf 290° C erhitzt. Der das Glasrohr verlassende Gasstrom wurde in 3 l einer wäßrigen Rußsuspension mit einem Rußgehalt von 8 g/l unter Rühren bei 25° C eingeleitet. Aus dem Glasrohr wurden 19 g trockener, frei fließender Ruß entnommen; aus der Rußsuspension hatte sich der Ruß als pulverige Phase an der Wasseroberfläche abgeschieden.

Der trockene Ruß hatte eine BET-Oberfläche (vergl. Brunauer, Emmet und Teller; J. Amer. Chem. Soc. 60 (1938) 309) von 1100 m²/g, eine Jod-Adsorption (vergl. ASTM D 1510-65) von 1,05 g/g Ruß, einen Aschegehalt von 2,5% sowie einen Gehalt an Benzollöslichem von 0,2 und an Acetonlöslichem von 0,1%.

## Beispiel 3 (gemäß der Erfindung)

Das Beispiel 2 wurde mit der Änderung durchgeführt, daß der benzindampfhaltige Stickstoff-Strom unter Rühren in die auf 45 bis 50° C erwärmte Rußsuspension eingeleitet wurde. Auch dabei schied sich der Ruß als pulverige, frei fließende Phase an der Wasseroberfläche ab, während die wäßrige Phase völlig klar war. Es wurden 89 g Ruß als pulverige Phase abfiltriert, welcher wie in Beispiel 2 angegeben getrocknet wurde.

## Beispiel 4 (gemäß der Erfindung)

Das Beispiel 2 wurde mit der Änderung durchgeführt, daß eine wäßrige Rußsuspension mit einem Rußgehalt von 18 g/l verwendet wurde. Wegen der damit verbundenen höheren Viskosität der Suspension mußte während des Einleitens des benzindampfhaltigen Stickstoff-Stromes wesentlich kräftiger gerührt werden. Nach Einleiten von 350 l des benzindampfhaltigen Stickstoffs hatte sich der Ruß vollständig als pulverige Phase an der Wasseroberfläche abgeschieden, während die wäßrige Phase völlig klar war. Es wurden 318 g Ruß als pulverige Phase abfiltriert, welcher wie in Beispiel 2 angegeben getrocknet wurde.

## Patentansprüche

1. Verfahren zur Entfernung von Ruß aus einer wäßrigen Suspension, welche durch Auswaschen eines rußhaltigen Gases mit Wasser erhalten wurde, durch Behandeln der Suspension mit Kohlenwasserstoffen sowie Abtrennen und Trocknen des Rußes, dadurch gekennzeichnet, daß man in die einen Feststoffgehalt von 0,5 bis 4 Gew.-% aufweisende Suspension einen aus Kohlenwasserstoffen und mindestens einem Inertgas bestehenden Gasstrom bei Temperaturen von 10 bis 80°C einleitet, wobei der Gasstrom durch Überleiten von Inertgas über auf Temperaturen von 200 bis 400°C erhitzen abgetrennten, die Kohlenwasserstoffe enthaltenden Ruß erzeugt wird.

2. Verfahren nach Anspruch 1, dadurch gekennzeichnet, daß der Gasstrom zur Abtrennung des Rußes in Form von Schüttgut vom Wasser 5 bis 30 Volumen-% Kohlenwasserstoffe enthält.

3. Verfahren nach Anspruch 1, dadurch gekennzeichnet, daß der Gasstrom zur Abtrennung des Rußes in Form einer schaumigen Paste vom Wasser 0,1 bis 5 Volumen-% Kohlenwasserstoffe enthält.

4. Verfahren nach einem der Ansprüche 1 bis 3, dadurch gekennzeichnet, daß die Einleitung des Gasstromes unter Rühren erfolgt.

5. Verfahren nach einem der Ansprüche 1 bis 4, dadurch gekennzeichnet, daß aliphatische oder cycloaliphatische Kohlenwasserstoffe mit 4 bis 8 C-Atomen verwendet sind.

6. Verfahren nach einem der Ansprüche 1 bis 5, dadurch gekennzeichnet, daß als Inertgas Stickstoff dient.

## Claims

1. Process for removing carbon black from an aqueous suspension obtained by washing a gas containing carbon black with water, treating the suspension with hydrocarbons, separating and drying the carbon black characterized in that a gas stream consisting of hydrocarbons and at least one inert gas is introduced at temperatures of 10 to 80°C into the suspension containing 0.5 to 4% by weight solid matter, the gas stream being produced by passing inert gas over the carbon black which contains the hydrocarbons, has been separated, and heated to temperatures of 200 to 400°C.

2. Process according to claim 1, characterized in that the gas stream for separating the carbon black from water in the form of bulk material contains 5 to 30% by volume of hydrocarbons.

3. Process according to claim 1, characterized in that the gas stream for separating the carbon black form water in the form of a foamy paste contains 0.1 to 5% by volume of hydrocarbons.

4. Process according to any of claims 1 to 3, characterized in that the gas stream is introduced with agitation.

5. Process according to any of claims 1 to 4, characterized in that aliphatic or cycloaliphatic hydrocarbons having from 4 to 8 carbon atoms are used.

6. Process according any of to claims 1 to 5, characterized in that nitrogen is used as inert gas.

## Revendications

1. Procédé d'élimination de noir de fumée d'une suspension aqueuse obtenue par lavage à l'eau d'un gaz contenant du noir de fumée, par traitement de la suspension par des hydrocarbures, séparation et séchage du noir de fumée, caractérisé en ce que l'on introduit à 10 – 80°C, dans la suspension à 0,5 à 4% en poids de matière solide, un courant gazeux constitué par des hydrocarbures et au moins un gaz inerte, le courant gazeux étant produit par passage du gaz inerte sur du noir de fumée contenant les hydrocarbures, séparé et chauffé à des températures de 200 à 400°C.

2. Procédé selon la revendication 1, caractérisé en ce que le courant gazeux destiné à la séparation du noir de fumée de l'eau sous forme de matière tassée contient 5 à 30% en volume d'un hydrocarbure.

3. Procédé selon la revendication 1, caractérisé en ce que le courant gazeux destiné à la séparation du noir de fumée de l'eau sous forme d'une pâte contient 0,1 à 5% en volume d'un hydrocarbure.

4. Procédé selon l'une des revendications 1 à 3, caractérisé en ce que l'on introduit le courant gazeux avec agitation.

5. Procédé selon l'une des revendications 1 à 4, caractérisé en ce qu'on utilise des hydrocarbures cycloaliphatiques ou aliphatiques en $C_4 - C_8$.

6. Procédé selon l'une des revendications 1 à 5, caractérisé en ce que l'on utilise l'azote comme gaz inerte.